# EUROPÄISCHE PATENTANMELDUNG

(11) **EP 1 201 115 A1**
(43) Veröffentlichungstag der Anmeldung: **02.05.2002**
(21) Anmeldenummer: 00118801.0
(22) Anmeldetag: 30.10.2000
(51) Int. Cl.: A01G 13/10

(54) **Schneckenzaun**

(71) Anmelder: Gäde, Gregor, 86825 Bad Woerishofen (DE)
(72) Erfinder: Gäde, Gregor, 86825 Bad Woerishofen (DE)
(74) Vertreter: Fiener, Josef

(57) **Zusammenfassung**

Es handelt sich um eine Neuerfindung eines Schneckenzaunes (1), um das Problem des Schneckenfraßes im Garten zu beheben.

## Beschreibung

### Funktion:

Durch diesen Zaun wird ein Eindringen der Schnecken in den umzäunten Bereich (Beet) verhindert, wodurch die Pflanzen nicht mehr angefressen werden können.

### Neuheit:

Der mit Zacken versehene Sockel wird so tief in das Erdreich gesteckt, daß die Schnecken auch nicht im Erdreich unter dem Zaun hindurchkriechen können.

Mit Scharnieren werden die einzelnen Elemente endlos verbunden. Es sind keine Werkzeuge notwendig zum Autbau des Schneckenzaunes.

Durch die kreisförmige Anordnung der Stacheln um das Scharnier kann der Schneckenzaun auch im Kreis oder in verschiedenen Winkeln verlegt werden; und auch in diesem Fall wird ein Durchdringen der Schnecke zuverlässig verhindert.

Ferner ist das Entscheidende an dieser Neuerfindung, daß durch die Stacheln und deren lückenlose Anordnung der Schmierfilm der Schnecke abrelßt. Darum fallen die Schnecken ab.

Der GADE-"Schneckenzaun" wird auch aus umweltfreundlichem und wetterfestem Recyling-Kunststoff-matenal gefertigt

### Beschreibung:

Der Sockel (in Zeichnung: 1)) ist 18 cm hoch und 50,80 cm lang und mit Bögen (in Zeichnung: 2)) und spitzen Zacken (in Zeichnung: 3)) versehen, wodurch er sich leicht und tief genug in das Erdreich drücken läßt und fest sitzt. Die einzelnen Sockelelemente schließen dicht aneinander, so daß es keine Schlupflöcher für die Schnecken gibt.

Rechtwinklig außen oben am Sockel befindet sich eine Querverbindung von 1,8 cm Breite, an der sich der eigentliche Schneckenzaun (in Zeichnung: 4)) befindet. Er ist 0.9 cm breit. Am äußeren Rand verläuft im rechten Winkel nach unten die Slachelreihe mit 1,8 cm hohen spitz auslaufenden Stacheln. Diese sind dreireihig versetzt uber die gesamte Länge jedes Zaun-Elements angeordnet (in Zeichnung: 5)) und enden kreisförmig auf einer Seite am Scharnier (in Zeichnung: 7)), wodurch verhindert wird, daß im Bereich des geschlossenen Scharniers sowie den einzelnen Stacheln Lücken entstehen. Der Durchmesser eines Stachels ist ca 1 mm an der Spitze und ca 2 mm am Ansatz.

Die einzelnen Zaun-Elemente werden durch Einsteck-Scharniere beidseitig verbunden (in Zeichnung: 6 und 7)) - eine Konstruktion wie bei Türscharnieren: Stift in Rohr stecken -.

Die Stacheln sind endlos fortgesetzt und stoßen auf eine dafür vorgesehene Kante des nächsten Elements.

### Gewerbliche Anwendbarkeit:

Jeder (Hobby)-Gartner verzweifelt fast bei der Bekämpfung der Schneckenplage. Nur chemische Mittel bekämpfen bisher zuverlassig die Schnecken, Das hat jedoch Auswirkungen auf die angebauten Pflanzen und ist nicht umweltfreundlich. Das Töten der Tiere ist nicht jedermanns Sache. Der GADE-"Schneckenzaun" ist ein willkommenes Produkt und serienmäßig aus einer Form zu fertigen. Er wird im Handel erhältlich sein.

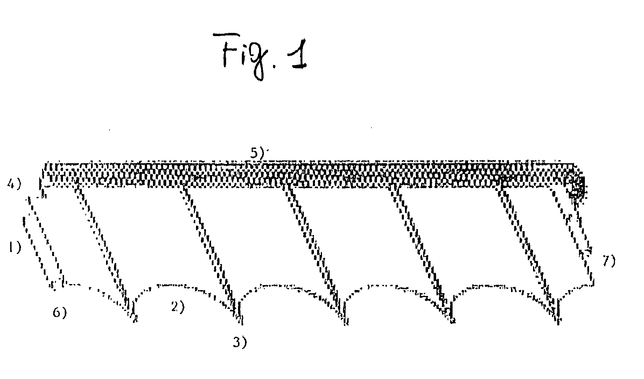

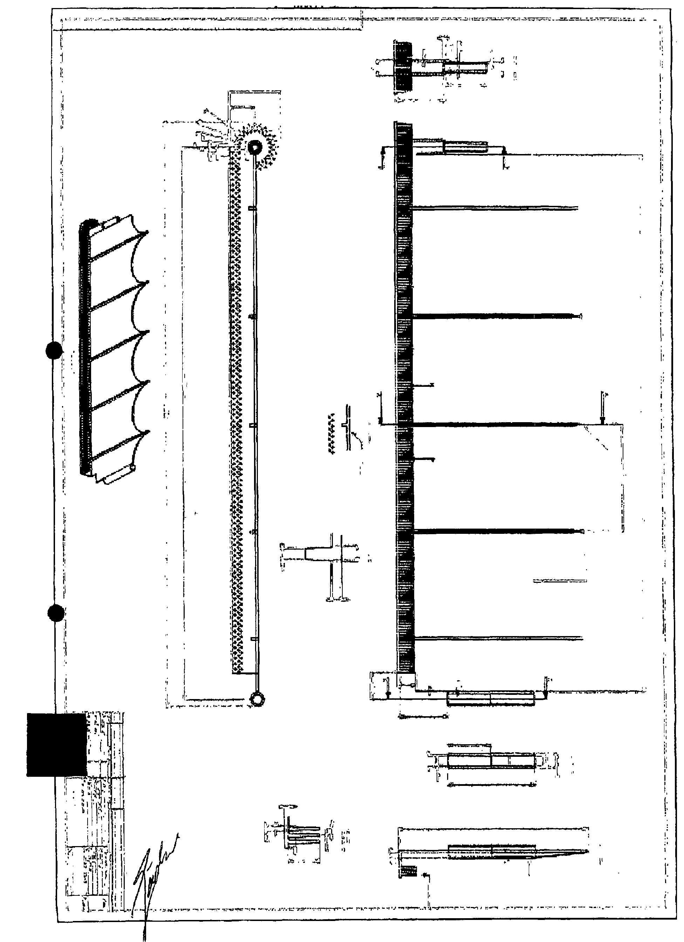

## Patentansprüche

1. Schneckenzaun mit mehreren, versetzt angeordneten Stachelreihen (5), **dadurch gekennzeichnet, daß** an den Enden der einzelnen Zauneleaente (1) Scharniere (6, 7) vorgesehen sind, wobei über den Scharnieren (6, 7) ebenfalls Stachelreihen (5) vorgesehen sind.

2. Schneckenzaun nach Anspruch 1, **dadurch gekennzeichnet, daß** an den Zaunelementen (1) senkrechte Versteifungen (3) vorgesehen sind.

3. Schneckenzaun nach Anspruch 2, **dadurch gekennzeichnet, daß** zwischen den Versteifungen (3) Bögen (2) angeordnet sind.
